# EUROPEAN PATENT SPECIFICATION

(11) **EP 3 968 196 B1**
(45) Date of publication and mention of the grant of the patent: **11.11.2026**
(21) Application number: 20195750.3
(22) Date of filing: 11.09.2020
(51) Int. Cl.: G06F 21/44, G07C 5/00, H04W 4/44

(54) **A METHOD FOR CONTROLLING A COMMUNICATION BETWEEN A VEHICLE AND A BACKEND DEVICE**
VERFAHREN ZUR STEUERUNG EINER KOMMUNIKATION ZWISCHEN EINEM FAHRZEUG UND EINER BACKEND-VORRICHTUNG
PROCÉDÉ DE COMMANDE D'UNE COMMUNICATION ENTRE UN VÉHICULE ET UN DISPOSITIF D'ÉTAGE DE SORTIE

(43) Date of publication of application: 16.03.2022
(73) Proprietor: VOLKSWAGEN AG, 38440 Wolfsburg (DE)
(72) Inventor: Demann, Tony, 44807 Bochum (DE); De Bakker, Marco, 6021 ZL Budel (NL); Bas, Frederik, 5262 EW Vught (NL)

(56) References cited:
- WO-A1-2020/139400
- US-A1- 2016 036 586
- CESAR BERNARDINI ET AL: "Security and privacy in vehicular communications: Challenges and opportunities", VEHICULAR COMMUNICATIONS, vol. 10, 3 November 2017 (2017-11-03), pages 13 - 28, XP055435906, ISSN: 2214-2096, DOI: 10.1016/j.vehcom.2017.10.002

## Description

A method for controlling a communication between a vehicle and a backend device The invention is related to a method for controlling a communication between a vehicle and a backend device in a vehicle-to-cloud-system, especially from the vehicle side of the system, according to the independent method claim. Further, the invention is related to an electronic control unit according to the independent device claim. Furthermore, the invention is related to a vehicle comprising a corresponding electronic control unit according to the second independent device claim. Moreover, the invention is related to a computer program product for a corresponding method according to the independent product claim.

Vehicle-to-cloud-systems are basically known, for example from DE 10 2015 200 422 A1 or WO 2020/139400 A1. Electronic control units in vehicles usually have computing units. However, these computing units are often limited in processing power and storage amount. Also, the access to programming updates or other data is sometimes combined with complications. On the other hand, cloud computers usually provide high computational power, large memory and easy access to updates as well as to other data. Vehicle-to-cloud-systems serve to provide cloud-computing applications in order to enhance vehicle functionalities for increased safety and intelligence as well as environmental and customer friendliness while adding to the comfortable and enjoyable operations. For this aim, electronic control units may send requests for certain applications to be provided within the cloud. Further, in the modern vehicle-to-cloud-systems a synchronization may be provided between the electronic control units and the cloud. However, known systems do not consider or treat the situations flexibly enough, when for example the communication between the vehicle and the cloud is not allowed.

The aim of the present invention is to provide a method for controlling a communication between a vehicle and a backend device in a vehicle-to-cloud-system, especially from the vehicle side of the system, with improved security of the communication, preferably in an easy, simple and reliable way. The aim of the present invention is especially to provide a method for controlling a communication between a vehicle and a backend device in a vehicle-to-cloud-system, which enables reducing vulnerabilities and ensuring protection against tamper and hack attempts, against unauthorized access to vehicle or user information or to system settings, against damage and harm to the vehicle or to the user as well as against using the vehicle as a platform for further attacks. Also, the aim of the invention is to provide a corresponding electronic control unit for the vehicle, a corresponding vehicle and a related computer program product for the inventive method. The present invention is defined by the appended independent claims. Preferred embodiments are set out in the dependent claims.

According to the first aspect, embodiments of the invention provide a method for controlling a communication between a vehicle and a backend device in a vehicle-to-cloud-system, especially from the vehicle side of the system, with the features of the independent method claim. According to the second aspect, embodiments of the invention provide an electronic control unit with the features of the independent device claim. According to the third aspect, embodiments of the invention provide a vehicle comprising a corresponding electronic control unit with the features of the second independent device claim. Additionally, an aspect of the invention is a corresponding vehicle-to-cloud-system. According to the fourth aspect, embodiments of the invention provide a computer program product for a corresponding method with the features of the independent product claim. Details and features disclosed on individual aspects of the invention also apply to the other aspects of the invention and vice versa.

According to the first aspect, embodiments of the invention provide a method for controlling a (preferably wireless) communication (over a network, for example mobile phone network) between a vehicle and at least one backend device (on the cloud side of the system) in a vehicle-to-cloud-system, especially from the vehicle side of the system, preferably using a publish-subscribe environment such as Message Queuing Telemetry Transport (MQTT) protocol, the method comprising:
- establishing a first connection between at least one vehicle subunit with a connectivity unit of the vehicle,
- executing a first security check in order to verify if the at least one vehicle subunit is allowed to connect to or to be connected with the at least one backend device, by the at least one, preferably machine code programmable, vehicle subunit, wherein the first security check provides a first level of security,
- establishing a second connection between the connectivity unit and the at least one backend device,
- executing a second security check in order to verify if the at least one vehicle subunit is allowed to connect to or to be connected with the at least one backend device, by the, preferably java code programmable, connectivity unit, wherein the second security check provides a second level of security.

Embodiments of the method may be carried out in the given order or in a modified order. Individual actions of the method may be carried out simultaneously and/or repeatedly to allow a flowing process.

A backend device within the meaning of the invention is a computer or a group of computers providing a high computational power, a large memory and easy access to updates as well as to other data that may be used in the vehicle. The backend device within the meaning of the invention is the representative of the cloud.

The at least one vehicle subunit may be associated with a vehicle device using online mobile services provided by the backend device. For this aim, the vehicle device may be configured to subscribe to a publish-subscribe messaging environment using different topics provided by various backend devices. The vehicle device (using mobile online services) may be a sensor, safety, environment, information, entertainment or comfort device. The online mobile services may serve to increase safety and intelligence functionality of the vehicle device as well as to contribute to environmental and customer friendliness in the vehicle while adding to the comfortable and enjoyable operations.

The at least one vehicle subunit may be provided in form of a connectivity subunit to connect the corresponding vehicle device to a desired communication partner.

The at least one vehicle subunit may comprise a plurality of vehicle subunits for different vehicle devices. The plurality of vehicle subunits with corresponding vehicle devices may build an embedded system within the vehicle.

The vehicle device may be configured using source code of different programming languages. The vehicle device may be controlled using machine code. Also, the at least one vehicle subunit may use machine code to connect the corresponding vehicle device to a desired communication partner.

The connectivity unit may use a universal code programming language, for example java programming language, to connect the at least one vehicle subunit to the backend device.

The idea is to provide two layers of protection: a first layer of security within a native layer that is within the at least one vehicle subunit, and a second layer of security within a java layer that is within the connectivity unit.

The first layer of security, which is within the at least one, preferably machine code programmable, vehicle subunit, provides a first security check. The first security check provides a first level of security.

The second layer of security, which is within the, preferably java programmable, connectivity unit, provides a second security check. The second security check provides a second level of security.

In both layers, security checks may be executed based on operation at the lowest level if it is allowed for that vehicle subunit or for that specific operation of the vehicle subunit to connect to the backend device, for example using that specific uniform resource locator (URL), web address or uniform resource identifier (URI). Thus, the check is double implemented.

A double security check makes it impossible or makes it at least not too easy to hack the system. The double security check helps to increase the security of the communication between the vehicle and the backend device clearly and noticeably. Also, the costs are not too high. Thus, the improved security may be provided in an easy, simple and reliable way.

In some embodiments, the first security check and the second security check have the same schedules. Thus, the method may be executed in an easy, simple and cost effective way.

In some embodiments, the first security check and the second security check have at least one low level security test. The simplest security tests may help by the double security check to increase security in a considerable way. The probability to overcome both security tests is noticeably reduced. Thus, a reliable way of protection against cyber-attacks may be provided.

In some embodiments, the first security check and the second security check have at least one identifying test in order to authenticate the at least one vehicle subunit and/or the at least one backend device. Thus, only signed vehicle subunits as well as backend devices may establish a corresponding connection. Devices which are not identified are considered improper and are not allowed to establish a connection.

In some embodiments, the first security check and the second security check have at least one authorization test in order to verify the authorization of the at least one vehicle subunit and/or the at least one backend device to establish a corresponding connection. Thus, only authorized vehicle subunits as well as backend devices with a predetermined (for example cryptographic) key (that may be stored within a memory of an electronic control unit of the vehicle or within the connectivity unit itself) may establish a corresponding connection. Devices without the predetermined key are considered improper and are not allowed to establish a connection.

In the embodiments of the invention, before establishing the second connection, at least one further level of security is provided by executing at least one further security check. The at least one further (or each further) security check provided additionally to the double security check may help to increase the security exponentially and to reduce the probability of vulnerabilities drastically.

In the embodiments of the invention, before establishing the second connection, a third level of security is provided by executing a third security check by a connecting gateway interconnecting the at least one vehicle subunit with the connectivity unit. The connecting gateway may be used for routing the messages between a plurality of vehicle subunits and the at least one backend device. Thus, the connecting gateway may provide a third layer to provide a third security check.

In some the embodiments of the invention, before establishing the second connection, a fourth level of security is provided by executing a fourth security check by a project connecting gateway interconnecting the at least one vehicle subunit with the connecting gateway. The project connecting gateway may be used for a group of vehicle subunits corresponding to one project, to provide a connection line for the group of vehicle subunits to the connecting gateway, for example TLS. Thus, the project connecting gateway may provide a fourth layer to provide a fourth security check.

In some embodiments, the second security check may be executed by a proxy server of the connectivity unit. A proxy server may act on behalf of the vehicle subunits when requesting a connection to the at least one backend device, masking the origin of the request to the backend device.

In some embodiments, the second connection between the connectivity unit and the at least one backend device is allowed if all security checks are positive. Thus, an improved security may be provided in an easy way.

In some embodiments, the second connection between the connectivity unit and the at least one backend device is prohibited if at least one security check is negative. Thus, an easy and secure way may be provided to prohibit improper connections.

In some embodiments, at least one of the following tamper detection operations is executed, when at least one security check is negative:
- resetting an electronic control unit of the vehicle,
- erase authorization keys,
- provide an alarm.

Thus, immediate measures may be provided to react to a tamper. Also, a user of the vehicle may be informed about a hack attempt and/or improper connections.

According to the second aspect, embodiments of the invention provide an electronic control unit comprising: a memory, in which a program code is stored, and a computing unit, wherein when carrying out the program code by the computing unit, a method is performed as described above. With embodiments of such inventive electronic control unit the same advantages may be achieved as with corresponding embodiments of the method described above. Full reference is made to these advantages in the present case.

Embodiments of the invention provide, according to the third aspect, a vehicle comprising a corresponding electronic control unit. With such vehicle the same advantages may be achieved as with the electronic control unit described above. Full reference is made to these advantages in the present case.

Another advantage of the invention may be achieved by providing a corresponding vehicle-to-cloud-system.

According to the fourth aspect, the invention provides a computer program product comprising a program code for carrying out a method as described above. In other words, the computer program product comprises instructions which, when the program is executed by a computer, cause the computer to carry out embodiments of the method described above. With embodiments of such computer program product the same advantages may be achieved as with corresponding embodiments of the method described above. Full reference is made to these advantages in the present case.

Embodiments of the invention and its further developments as well as its advantages will be explained in more detail below using figures. The figures show schematically:
- Fig. 1: a schematic design of a vehicle-to-cloud-system within the meaning of the invention and
- Fig. 2: a schematic design of an electronic control unit within the meaning of the invention.

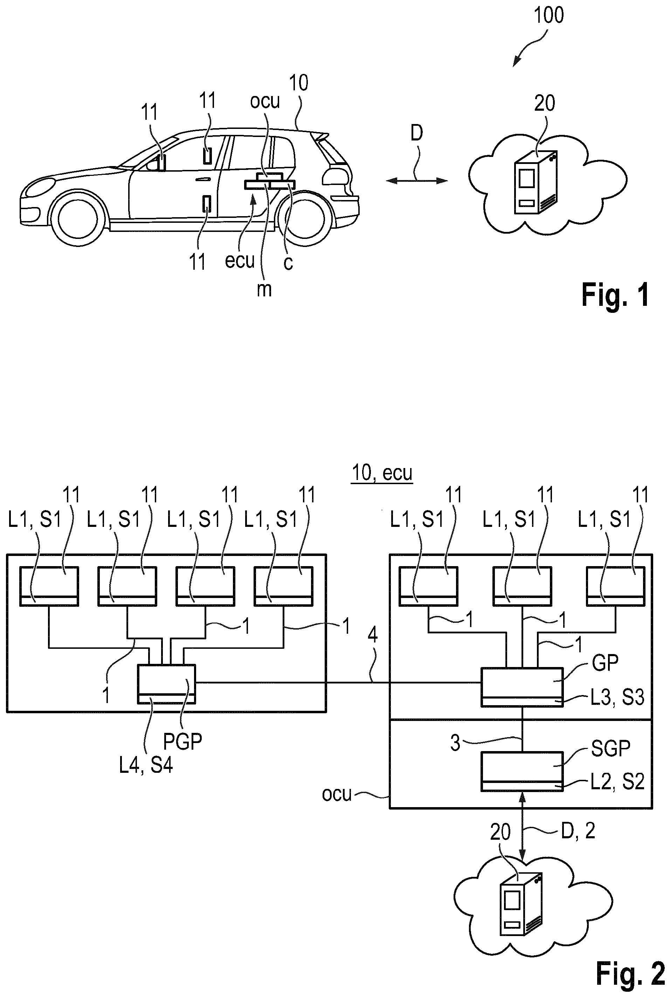

Figure 1 shows a vehicle-to-cloud-system 100. The vehicle-to-cloud-system 100 may have at least one vehicle 10 and at least one backend device 20 within the cloud. The vehicle 10 may have an electronic control unit ecu. The electronic control unit ecu may have an (online) connectivity unit ocu using wifi, internet or mobile phone communication standard, such as 5G, 6G and/or LTE to connect to the backend device 20.

To increase the functionality of the vehicle 10, the backend device 20 may provide high computational power, large memory and easy access to updates as well as to other data. Thus, cloud-computing applications may enhance vehicle functionalities, for example for more safety, intelligence, for environmental and customer-friendly and comfortable operations as well as for enjoyable operations. For this aim, the electronic control unit ecu may send requests for certain applications to be provided by the backend device 20. Also, a synchronization may be provided between the electronic control unit ecu and the backend device 20.

A backend device 20 may be provided as a computer or a group of many computers providing a high computational power, a large memory and easy access to updates as well as to other data that may be used in the vehicle. The backend device 20 may be provided by at least one or many cloud providers.

The at least one vehicle subunit 11 may serve as a connectivity subunit for a vehicle device using online mobile services provided by the backend device 20. For this aim, the vehicle device may be configured to subscribe to a publish-subscribe messaging environment using different topics provided by various backend devices 20. The vehicle device (using mobile online services) may be a sensor, safety, environment, information, entertainment or comfort device.

As figure 2 shows, the at least one vehicle subunit 11 may actually comprise a plurality of vehicle subunits 11 for different vehicle devices. The plurality of vehicle subunits 11 with corresponding vehicle devices may build an embedded system within the vehicle 10.

Figure 2 serves for explanation of a method for controlling a communication D between the vehicle 10 and the backend device 20 in the vehicle-to-cloud-system 100 schematically shown in figure 1, especially from the vehicle side of the system 100, preferably using a publish-subscribe environment such as a Message Queuing Telemetry Transport (MQTT) protocol. The method comprises:
- establishing a first connection 1 between at least one vehicle subunit 11 with a connectivity unit ocu of the vehicle 10;
- executing a first security check S1 in order to verify if the at least one vehicle subunit 11 is allowed to connect to or to be connected with the at least one backend device 20, especially by the at least one, preferably machine code programmable, vehicle subunit 11, wherein the first security check S1 provides a first level of security L1,
- establishing a second connection 2 between the connectivity unit ocu and the at least one backend device 20;
- executing a second security check S2 in order to verify if the at least one vehicle subunit 11 is allowed to connect to or to be connected with the at least one backend device 20, especially by the, preferably java code programmable, connectivity unit ocu, wherein the second security check S2 provides a second level of security L2.

The method may be carried out in the given order or in a modified order, preferably simultaneously and/or repeatedly to allow a flowing process and/or uninterrupted communication D.

The at least one vehicle subunit 11 may be a machine code programmable subunit. The connectivity unit ocu may be a universal code programmable unit, for example a java programmable unit.

As figure 2 schematically shows, the method provides two layers of protection: a first layer of security within a native layer that is within the at least one vehicle subunit 11, and a second layer of security within a java layer that is within the connectivity unit ocu.

The first layer of security which is within the at least one, preferably machine code programmable, vehicle subunit 11, provides a first security check S1 that is a first level of security L1.

The second layer of security which is within the, preferably java programmable, connectivity unit ocu, provides a second security check S2 that is a second level of security L2.

In both layers, security checks may be executed based on operation at the lowest level if it is allowed for that vehicle subunit 11 or for that specific operation of the vehicle subunit 11 to connect or to be connected to the backend device, for example using a specific uniform resource locator (URL), a web address or a uniform resource identifier (URI). Thus, the security checks S1, S2 are double implemented.

A double security check makes it impossible or nearly impossible to hack the embedded system within the vehicle 10.

It is possible that the first security check S1 and the second security check S2 have the same schedules.

Furthermore, it is possible that the first security check S1 and the second security check S2 have at least one low level security test. Thus, cost may be minimized by providing improved security.

Moreover, it is possible that first security check S1 and the second security check S2 have at least one identifying and/or authorization test in order to authenticate and/or to verify the authorization the at least one vehicle subunit 11 and/or the at least one backend device 20. Thus, only signed and/or authorized vehicle subunits 11 as well as backend devices 20 with a predetermined (for example cryptographic) key (that may be stored in a memory m of the electronic control unit ecu of the vehicle 10 or within the connectivity unit ocu) may establish a corresponding connection. Devices and/or subunits without the predetermined key are considered improper and are not allowed to establish a connection.

Furthermore, at least one further level of security L3, L4 may be provided between before establishing the second connection by executing at least one further security check S3, S4.

For example, a third level of security L3 may be provided before establishing the second connection by executing a third security check S3 by a connecting gateway GP interconnecting the at least one vehicle subunit 11 with the connectivity unit ocu. The connecting gateway GP may be used for routing the messages between a plurality of vehicle subunits 11 and the at least one backend device 20.

Moreover, it is possible that before establishing a second connection, a fourth level of security L4 is provided by executing a fourth security check S4 by a project connecting gateway PGP interconnecting the at least one vehicle subunit 11 with the connecting gateway GP. The project connecting gateway PGP may be used for a group of vehicle subunits 11 corresponding to a common project, to connect the group of vehicle subunits 11 to the connecting gateway GP, for example through a single connection line, such as TLS.

As the figure 2 schematically shows, the second security check may be executed by a proxy server SGP of the connectivity unit ocu, which may act on behalf of the vehicle subunits 11, requesting a connection to the at least one backend device 20, masking the origin of the request to the backend device 20.

In some embodiments, the second connection 2 between the connectivity unit ocu and the at least one backend device 20 is allowed if all security checks S1, S2 are positive. In some embodiments, the second connection 2 between the connectivity unit ocu and the at least one backend device 20 may be prohibited if at least one security check S1, S2 is negative.

In some embodiments, at least one of the following tamper detection operations, if at least one security check S1, S2 is negative:
- resetting an electronic control unit ecu of the vehicle 10,
- erase authorization keys,
- provide an alarm.

Thus, immediate measures may be provided to react to a tamper.

An electronic control unit ecu comprising a memory m, in which a program code is stored, and a computing unit c, wherein when carrying out the program code by the computing unit c, a method is performed as described above, provides the second aspect of the invention. In other words, the electronic control unit ecu is configured in such a way to execute embodiments of the method as described above.

The vehicle 10 comprising a corresponding electronic control unit ecu provides the third aspect of the invention.

Another aspect of the invention may be a corresponding vehicle-to-cloud-system 100.

Also, a computer program product comprising a program code for carrying out a method as described above provides an aspect of the invention.

The above description of the figures describes the present invention only in the context of examples. Of course, individual features of the embodiments may be combined with each other, provided it is technically reasonable, without leaving the scope of the invention.

### Reference signs

- 100: vehicle-to-cloud-system

- 10: vehicle
- 11: vehicle subunit

- 20: backend device

- ecu: electronic control unit
- c: computing unit
- m: memory
- ocu: connectivity unit

- 1: first connection
- 2: second connection
- 3: third connection
- 4: fourth connection

- D: communication

- L1: first level of security
- L2: second level of security
- L3: third level of security
- L4: fourth level of security

- S1: first security check
- S2: second security check
- S3: third security check
- S4: fourth security check

- GP: connecting gateway
- PGP: project connecting gateway
- SGP: proxy server

## Claims

1. A method for controlling a communication (D) between a vehicle (10) and at least one backend device (20) in a vehicle-to-cloud-system (100), the method comprising:
- establishing a first connection (1) between at least one vehicle subunit (11) and a connectivity unit (ocu) of the vehicle (10);
- executing a first security check (S1) in order to verify if the at least one vehicle subunit (11) is allowed to connect to or to be connected with the at least one backend device (20) by the at least one vehicle subunit (11), wherein the first security check (S1) provides a first level of security (L1);
- establishing a second connection (2) between the connectivity unit (ocu) and the at least one backend device (20);
- executing a second security check (S2) in order to verify if the at least one vehicle subunit (11) is allowed to connect to or to be connected with the at least one backend device (20) by the connectivity unit (ocu), wherein the second security check (S2) provides a second level of security (L2),
- wherein before establishing the second connection, the method further comprises executing at least one further security check (S3, S4) for providing at least one further level of security (L3, L4),
- wherein before establishing the second connection, the method further comprises executing a third security check (S3) by a connecting gateway (GP) interconnecting the at least one vehicle subunit (11) with the connectivity unit (ocu) for providing a third level of security (L3),
- and wherein before establishing the second connection, the method further comprises executing a fourth security check (S4) by a project connecting gateway (PGP) interconnecting the at least one vehicle subunit (11) with the connecting gateway (GP) for providing a fourth level of security (L4).

2. The method according to claim 1,
**characterized in that**
the first security check (S1) and the second security check (S2) have the same schedules.

3. The method according to any one of the preceding claims 1 or 2,
**characterized in that**
the first security check (S1) and the second security check (S2) have at least one low level security test.

4. The method according to any one of the preceding claims,
**characterized in that**
the first security check (S1) and the second security check (S2) have at least one identifying test in order to authenticate the at least one vehicle subunit (11) and/or the at least one backend device (20).

5. The method according to the preceding claim,
**characterized in that**
the first security check (S1) and the second security check (S2) have at least one authorization test in order to verify the authorization of the at least one vehicle subunit (11) and/or the at least one backend device (20) to establish a corresponding connection.

6. The method according to any one of the preceding claims,
**characterized in that**
executing the second security check is executed by a proxy server (SGP) of the connectivity unit (ocu).

7. The method according to any one of the preceding claims,
**characterized in that**
the second connection (2) between the connectivity unit (ocu) and the at least one backend device (20) is allowed if all security checks (S1, S2, S3, S4) are positive.

8. The method according to any one of the preceding claims,
**characterized in that**
the second connection (2) between the connectivity unit (ocu) and the at least one backend device (20) is prohibited if at least one security check (S1, S2, S3, S4) is negative.

9. The method according to any one of the preceding claims,
**characterized in that**
at least one of the following tamper detection operations is executed, if at least one security check (S1, S2) is negative:
- resetting an electronic control unit (ecu) of the vehicle (10),
- erase authorization keys,
- provide an alarm.

10. A system (100) comprising: a connectivity unit (ocu), a connecting gateway (GP), a project connecting gateway (PGP), at least one vehicle subunit (11) and an electronic control unit (ecu), **characterised in that** the system is configured to perform the method steps according to any one of the preceding claims.

11. A vehicle (10) comprising a system (100) according to the preceding claim.

12. A computer program product comprising instructions which, when the program is executed by a system (100), cause the system (100) to carry out a method according to any one of claims 1 to 9.

## Patentansprüche

1. Verfahren zum Steuern einer Kommunikation (D) zwischen einem Fahrzeug (10) und mindestens einer Back-End-Vorrichtung (20) in einem Fahrzeug-zu-Cloud-System (100), das Verfahren umfassend:
- Herstellen einer ersten Verbindung (1) zwischen mindestens einer Fahrzeuguntereinheit (11) und einer Konnektivitätseinheit (ocu) des Fahrzeugs (10);
- Ausführen einer ersten Sicherheitsprüfung (S1) durch die mindestens eine Fahrzeuguntereinheit (11), um zu verifizieren, ob es der mindestens einen Fahrzeuguntereinheit (11) erlaubt ist, sich mit der mindestens einen Back-End-Vorrichtung (20) zu verbinden oder mit dieser verbunden zu werden, wobei die erste Sicherheitsprüfung (S1) ein erstes Sicherheitsniveau (L1) bereitstellt;
- Herstellen einer zweiten Verbindung (2) zwischen der Konnektivitätseinheit (ocu) und der mindestens einen Back-End-Vorrichtung (20);
- Ausführen einer zweiten Sicherheitsprüfung (S2) durch die Konnektivitätseinheit (ocu), um zu verifizieren, ob es der mindestens einen Fahrzeuguntereinheit (11) erlaubt ist, sich mit der mindestens einen Back-End-Vorrichtung (20) zu verbinden oder mit dieser verbunden zu werden, wobei die zweite Sicherheitsprüfung (S2) ein zweites Sicherheitsniveau (L2) bereitstellt,
- wobei vor dem Herstellen der zweiten Verbindung das Verfahren ferner das Ausführen mindestens einer weiteren Sicherheitsprüfung (S3, S4) zum Bereitstellen mindestens eines weiteren Sicherheitsniveaus (L3, L4) umfasst,
- wobei vor dem Herstellen der zweiten Verbindung das Verfahren ferner das Ausführen einer dritten Sicherheitsprüfung (S3) durch ein Verbindungsgateway (GP), das die mindestens eine Fahrzeuguntereinheit (11) mit der Konnektivitätseinheit (ocu) verbindet, zum Bereitstellen eines dritten Sicherheitsniveaus (L3) umfasst,
- und wobei vor dem Herstellen der zweiten Verbindung das Verfahren ferner das Ausführen einer vierten Sicherheitsprüfung (S4) durch ein Projektverbindungsgateway (PGP), das die mindestens eine Fahrzeuguntereinheit (11) mit dem Verbindungsgateway (GP) verbindet, zum Bereitstellen eines vierten Sicherheitsniveaus (L4) umfasst.

2. Verfahren nach Anspruch 1,
**dadurch gekennzeichnet, dass**
die erste Sicherheitsprüfung (S1) und die zweite Sicherheitsprüfung (S2) dieselben Zeitpläne aufweisen.

3. Verfahren nach einem der vorstehenden Ansprüche 1 oder 2,
**dadurch gekennzeichnet, dass**
die erste Sicherheitsprüfung (S1) und die zweite Sicherheitsprüfung (S2) mindestens einen Sicherheitstest eines niedrigen Niveaus aufweisen.

4. Verfahren nach einem der vorstehenden Ansprüche,
**dadurch gekennzeichnet, dass**
die erste Sicherheitsprüfung (S1) und die zweite Sicherheitsprüfung (S2) mindestens einen Identifizierungstest aufweisen, um die mindestens eine Fahrzeuguntereinheit (11) und/oder die mindestens eine Back-End-Vorrichtung (20) zu authentifizieren.

5. Verfahren nach dem vorstehenden Anspruch,
**dadurch gekennzeichnet, dass**
die erste Sicherheitsprüfung (S1) und die zweite Sicherheitsprüfung (S2) mindestens einen Autorisierungstest aufweisen, um die Autorisierung der mindestens einen Fahrzeuguntereinheit (11) und/oder der mindestens einen Back-End-Vorrichtung (20) zu verifizieren, um eine entsprechende Verbindung herzustellen.

6. Verfahren nach einem der vorstehenden Ansprüche,
**dadurch gekennzeichnet, dass**
das Ausführen der zweiten Sicherheitsprüfung durch einen Proxy-Server (SGP) der Konnektivitätseinheit (ocu) ausgeführt wird.

7. Verfahren nach einem der vorstehenden Ansprüche,
**dadurch gekennzeichnet, dass**
die zweite Verbindung (2) zwischen der Konnektivitätseinheit (ocu) und der mindestens einen Back-End-Vorrichtung (20) erlaubt ist, falls alle Sicherheitsprüfungen (S1, S2, S3, S4) positiv sind.

8. Verfahren nach einem der vorstehenden Ansprüche,
**dadurch gekennzeichnet, dass**
die zweite Verbindung (2) zwischen der Konnektivitätseinheit (ocu) und der mindestens einen Back-End-Vorrichtung (20) untersagt ist, falls mindestens eine Sicherheitsprüfung (S1, S2, S3, S4) negativ ist.

9. Verfahren nach einem der vorstehenden Ansprüche,
**dadurch gekennzeichnet, dass**
mindestens einer der folgenden Manipulationserkennungsvorgänge ausgeführt wird, falls mindestens eine Sicherheitsprüfung (S1, S2) negativ ist:
- Zurücksetzen einer elektronischen Steuerungseinheit (ecu) des Fahrzeugs (10),
- Löschen von Autorisierungsschlüsseln,
- Bereitstellen eines Alarms.

10. System (100), umfassend: eine Konnektivitätseinheit (ocu), ein Verbindungsgateway (GP), ein Projektverbindungsgateway (PGP), mindestens eine Fahrzeuguntereinheit (11) und eine elektronische Steuerungseinheit (ecu), **dadurch gekennzeichnet, dass** das System konfiguriert ist, um die Verfahrensschritte nach einem der vorstehenden Ansprüche durchzuführen.

11. Fahrzeug (10), umfassend ein System (100) nach dem vorstehenden Anspruch.

12. Computerprogrammprodukt, umfassend Anweisungen, die, wenn das Programm durch ein System (100) ausgeführt wird, das System (100) veranlassen, ein Verfahren nach einem der Ansprüche 1 bis 9 zu verrichten.

## Revendications

1. Procédé permettant de commander une communication (D) entre un véhicule (10) et au moins un dispositif dorsal (20) dans un système de véhicule à nuage (100), le procédé comprenant :
- l'établissement d'une première connexion (1) entre au moins une sous-unité de véhicule (11) et une unité de connectivité (ocu) du véhicule (10) ;
- l'exécution d'un premier contrôle de sécurité (S1) afin de vérifier si l'au moins une sous-unité de véhicule (11) est autorisée à se connecter à ou à être connectée avec l'au moins un dispositif dorsal (20) par l'au moins une sous-unité de véhicule (11), dans lequel le premier contrôle de sécurité (S1) fournit un premier niveau de sécurité (L1) ;
- l'établissement d'une seconde connexion (2) entre l'unité de connectivité (ocu) et l'au moins un dispositif dorsal (20) ;
- l'exécution d'un deuxième contrôle de sécurité (S2) afin de vérifier si l'au moins une sous-unité de véhicule (11) est autorisée à se connecter à ou à être connectée avec l'au moins un dispositif dorsal (20) par l'unité de connectivité (ocu), dans lequel le deuxième contrôle de sécurité (S2) fournit un deuxième niveau de sécurité (L2),
- dans lequel avant d'établir la seconde connexion, le procédé comprend en outre l'exécution d'au moins un contrôle de sécurité supplémentaire (S3, S4) pour fournir au moins un niveau de sécurité supplémentaire (L3, L4),
- dans lequel avant l'établissement de la seconde connexion, le procédé comprend en outre l'exécution d'un troisième contrôle de sécurité (S3) par une passerelle de connexion (GP) interconnectant l'au moins une sous-unité de véhicule (11) avec l'unité de connectivité (ocu) pour fournir un troisième niveau de sécurité (L3),
- et dans lequel avant d'établir la seconde connexion, le procédé comprend en outre l'exécution d'un quatrième contrôle de sécurité (S4) par une passerelle de connexion de projet (PGP) interconnectant l'au moins une sous-unité de véhicule (11) avec la passerelle de connexion (GP) pour fournir un quatrième niveau de sécurité (L4).

2. Procédé selon la revendication 1,
**caractérisé en ce que**
le premier contrôle de sécurité (S1) et le deuxième contrôle de sécurité (S2) ont les mêmes horaires.

3. Procédé selon l'une quelconque des revendications précédentes 1 ou 2,
**caractérisé en ce que**
le premier contrôle de sécurité (S1) et le deuxième contrôle de sécurité (S2) comportent au moins un test de sécurité de bas niveau.

4. Procédé selon l'une quelconque des revendications précédentes,
**caractérisé en ce que**
le premier contrôle de sécurité (S1) et le deuxième contrôle de sécurité (S2) comportent au moins un test d'identification afin d'authentifier l'au moins une sous-unité de véhicule (11) et/ou l'au moins un dispositif dorsal (20).

5. Procédé selon la revendication précédente,
**caractérisé en ce que**
le premier contrôle de sécurité (S1) et le deuxième contrôle de sécurité (S2) comportent au moins un test d'autorisation afin de vérifier l'autorisation de l'au moins une sous-unité de véhicule (11) et/ou de l'au moins un dispositif dorsal (20) à établir une connexion correspondante.

6. Procédé selon l'une quelconque des revendications précédentes,
**caractérisé en ce que**
l'exécution du deuxième contrôle de sécurité est exécuté par un serveur proxy (SGP) de l'unité de connectivité (ocu).

7. Procédé selon l'une quelconque des revendications précédentes,
**caractérisé en ce que**
la seconde connexion (2) entre l'unité de connectivité (ocu) et l'au moins un dispositif dorsal (20) est autorisée si tous les contrôles de sécurité (S1, S2, S3, S4) sont positifs.

8. Procédé selon l'une quelconque des revendications précédentes,
**caractérisé en ce que**
la seconde connexion (2) entre l'unité de connectivité (ocu) et l'au moins un dispositif dorsal (20) est interdite si au moins un contrôle de sécurité (S1, S2, S3, S4) est négatif.

9. Procédé selon l'une quelconque des revendications précédentes,
**caractérisé en ce que**
au moins l'une parmi les opérations de détection d'altération suivantes est exécutée, si au moins un contrôle de sécurité (S1, S2) est négatif :
- la réinitialisation d'une unité de commande électronique (ecu) du véhicule (10),
- l'effacement des clés d'autorisation,
- la fourniture d'une alarme.

10. Système (100) comprenant : une unité de connectivité (ocu), une passerelle de connexion (GP), une passerelle de connexion de projet (PGP), au moins une sous-unité de véhicule (11) et une unité de commande électronique (ecu), **caractérisé en ce que** le système est configuré pour réaliser les étapes de procédé selon l'une quelconque des revendications précédentes.

11. Véhicule (10) comprenant un système (100) selon la revendication précédente.

12. Produit-programme d'ordinateur comprenant des instructions, qui lorsque le programme est exécuté par un système (100), amènent le système (100) à mettre en œuvre un procédé selon l'une quelconque des revendications 1 à 9.
